# EUROPÄISCHE PATENTSCHRIFT

(11) **EP 1 903 192 B1**
(45) Veröffentlichungstag und Bekanntmachung des Hinweises auf die Patenterteilung: **03.11.2010**
(21) Anmeldenummer: 07016329.0
(22) Anmeldetag: 21.08.2007
(51) Int. Cl.: F01N 3/027, F01N 3/022, B01D 46/50

(54) **Vorrichtung zur Abgasnachbehandlung mit thermischer Regeneration**
Device for secondary treatment of exhaust gas with thermal regeneration
Dispositif destiné au retraitement de gaz d'échappement avec régénération thermique

(30) Priorität: 25.09.2006 AT 15962006
(43) Veröffentlichungstag der Anmeldung: 26.03.2008
(73) Patentinhaber: MAN Nutzfahrzeuge Österreich AG, 4400 Steyr (AT)
(72) Erfinder: Raab, Gottfried, 4320 Perg (AT); Richter, Klaus, 4400 Steyr (AT)

(56) Entgegenhaltungen:
- DE-A1- 3 705 979
- DE-C1- 4 103 653

## Beschreibung

Die Erfindung bezieht sich auf eine Vorrichtung zum Entfernen von im Abgasstrom eines Dieselmotors mitgeführten Russpartikeln entsprechend dem Oberbegriff des Anspruchs 1.

Aus der DE10057862 C1 ist ein Verfahren mit dazugehöriger Anordnung zur Verminderung kohlenstoffhaltiger Partikelemissionen von Dieselmotoren bekannt. Dabei strömt das vom Motor emittierte Gas durch einen Filter, wobei die im Abgas enthaltenen Partikel an Filteroberflächen abgeschieden werden und zwecks Regeneration des Filters die abgeschiedenen Partikel oxidiert werden. Die Regeneration wird durch nichtthermische, elektrische Oberflächengleitentladungen an den mit Partikel belegten Oberflächen ausgelöst.

Die DE 41 03 653 C1 offenbart eine Vorrichtung zum entfernen von in einem Abgasstrom eines Dieselmotors mitgeführten Russpartikeln mit mindestens einem, in einem Strömungskanal angeordneten und vom Abgasstrom durchströmten Filterelement. Es ist weiterhin eine Einrichtung zur Initiierung des Abbrands der auf Grund der Filtrierung am Filterelement anhaftenden Russpartikel vorgesehen. Dabei ist das Filterelement elektrisch geladen und die Einrichtung umfasst mindestens ein im Strömungskanal im Bereich des Filterelements entgegengesetzt geladenes Metallelement.

Wünschenswert wäre es jedoch, eine Vorrichtung zu schaffen, mit der die Regeneration der Filter exakt zu einem gewünschten Zeitpunkt und an einer bestimmten Stelle der Russablagerung vorgenommen werden kann. Es ist daher die Aufgabe der Erfindung, eine Vorrichtung zu schaffen, mit der die Initiierung der Filterregeneration an einem gewünschten Zeitpunkt und an einer vorausbestimmten Stelle innerhalb des Filters vorgenommen werden kann.

Die Aufgabe wird erfindungsgemäß durch den kennzeichnenden Teil des Patentanspruchs 1 gelöst. Die Erfindung ist vorteilhaft, da die Initiierung des Abbrandes der Russpartikel durch Bewegung des Metallelements immer dann initiiert werden kann, wenn eine ausreichende Beladung der Filter feststellbar ist. Das Metallelement kann gezielt zu einem beladenen Filterelement hinbewegt werden, wodurch zu einem exakt bestimmbaren Zeitpunkt und an einer vorbestimmbaren Stelle des Filterelements der Abbrand der Russpartikel bewirkt werden kann. Denkbar ist dabei, die erfindungsgemäße Vorrichtung auch bei Motoren mit hohem Russanfall und hoher HGR-Rate inkl. geringen NOX einzusetzen. Die Erfindung ist dabei unabhängig von der Anwendung für jeden Einsatzbereich eines Dieselmotors denkbar. Der Abbrand kann darüber hinaus durch Zuführung weiteren Sauerstoffs oder sonstiger chemischer Brandbeschleuniger unterstützt bzw. beschleunigt werden. Denkbar ist jedoch auch, die Regeneration der Filterelemente nicht durch ein Zündelement auszulösen, sondern durch ein Zündungsstrahl, einen lonenstrahl oder einen Gasstrahl. Die Erfindung sieht in vorteilhafter Weise vor, dass die Filterelemente elektrisch positiv geladen sind, wogegen das Metallelement eine negative elektrische Ladung aufweist. Das Metallelement ist relativ zu den Filterelementen horizontal zu diesen in den zwischen den Filterelementen angeordneten Strömungskanal einführbar.

Nach einer anderen Ausführungsform der Erfindung ist das Filterelement in einer Wand des den Abgasstrom führenden Strömungskanals angeordnet. Dies erweist sich als vorteilhaft, da die Funktion des Strömungskanals mit derjenigen des Filterelements vereinigt werden kann. Die Anordnung eines oder mehrerer separater Filter ist deshalb nicht erforderlich.

Nach einer weiteren Ausführungsform der Erfindung ist der Strömungskanal am stromabwärtigen Ende des Filterelements verschlossen. Der kontinuierlich nachströmende Abgasstrom wird auf diese Weise fortwährend durch das Filterelement gedrückt, weitere strömungslenkende Organe sind nicht vorzusehen.

In einer weiteren Ausführungsform der Erfindung ist das Metallelement in einem, den Strömungskanal verschließenden Boden gelagert.

Das Metallelement kann nach einer anderen Ausführungsform der Erfindung auch an einer Wand des Strömungskanals gelagert sein und mit seinem freitragenden Ende in Strömungsrichtung weisen. Hierdurch wird gewährleistet, dass das Metallelement unabhängig vom Durchmesser und der Länge des Strömungskanals stets im Bereich des Filterelements im Abgasstrom angeordnet ist. Aufgrund der Tatsache, dass das Metallelement mit seinem freitragenden Ende in Strömungsrichtung in den Strömungskanal weist, bleibt das Metallelement in jeder Position in der Lage, auszuschwingen.

Nach einer anderen Ausführungsform besteht das Filterelement aus einem leitendem Material z.B. Sintermetall.

Nach einer weiteren Ausführungsform der Erfindung ist das Metallelement etwa koaxial im Strömungskanal angeordnet. Hierdurch wird erreicht, dass das Metallelement mit Anlage einer elektrischen Spannung in einer beliebigen Richtung zum gebenden Strömungskanal ausschwingen kann. Denkbar ist, dass die Spannung diskontinuierlich in kurzen Abschnitten an das Metallelement angelegt wird. Somit wird gewährleistet, dass das Metallelement im Bereich seines freitragend in den Strömungskanal ragenden Endes mit einer beliebigen Seite des das Metallelement umgebenden Strömungskanals in Berührung kommt.

In einer anderen Ausführungsform der Erfindung sind mehrere Metallelemente neben - oder hintereinander in dem Strömungskanal angeordnet. Dadurch wird erreicht, dass Strömungskanäle größerer Breite und/oder größerer Längenausdehnung, sowie Strömungskanäle mit mehreren Filterelementen von den im Abgasstrom mitgeführten Russpartikeln befreit werden können.

In einer weiteren Ausführungsform der Erfindung ist die Wand des Strömungskanals im Bereich des Filterelements siebartig ausgebildet.

In einer weiteren Ausführungsform der Erfindung wird offenbart, dass der Strömungskanal von einem Mantel umschlossen ist, der das aus dem Filterelement austretende gereinigte Abgas aufnimmt. Hierdurch wird eine kompakte Bauweise erreicht, die die erforderlichen Baukomponenten auf ein Minimum reduziert.

In einer weiteren Ausführungsform der Erfindung ist im Abgasstrom ein auf dessen Druckänderung ansprechender Sensor angeordnet, der das Ausschwingen des Metallelements auslöst. Es ist vorteilhaft für die Schonung der Filterelemente, dass der Abbrand der am Filterelement anhaftenden Russpartikel nur in dem Augenblick erfolgt, in dem eine Verstopfung des Strömungskanals durch die Russpartikel droht. Ein Indiz für den drohenden Verschluss des Strömungskanals durch die am Filterelement anhaftenden Russpartikel ist der sich aufbauende Abgasgegendruck, der durch einen entsprechenden Sensor, der ein Gegendrucksensor sein kann, ermittelbar ist.

Vorstellbar ist, dass der Sensor im Abgasstrom angeordnet ist und bei einem vorbestimmten Druckanstieg das Ausschwingen des Metallelements auslöst. Vorstellbar ist auch, dass der Sensor in dem gereinigten Abgasstrom angeordnet ist und bei einem vorbestimmten Druckabfall das Ausschwingen des Metallelements auslöst. Auf diese Weise kann der Abbrand der am Filterelement anhaftenden Russpartikel zeitlich und örtlich präzise gesteuert werden. Vorstellbar ist, dass zur Ermittlung des Druckanstiegs bzw. Druckabfalls ein oder mehrere Sensoren im Abgasstrom und/oder im gereinigten Abgasstrom angeordnet sind.

Darüber hinaus ist vorstellbar, dass an dem, den Strömungskanal verschließenden Boden ein Behälter zur Aufnahme der Asche der abgebrannten Russpartikel angeordnet ist. Die siebartige Ausführung des Filterelements sowie die Anordnung eines Behälters zur Aufnahme der Asche der abgebrannten Russpartikel stellen sicher, dass die vom Abgasstrom kontinuierlich mitgeführten Russpartikel nach ihrem Abbrand einem Sammelbehälter zur regelmäßigen Entleerung zugeführt werden.

Weitere vorteilhafte Ausgestaltungen und zweckmäßige Fortbildungen der erfindungsgemäßen Vorrichtung sind aus den nachstehenden Beispielsbeschreibungen anhand der Zeichnung näher entnehmbar.

In der Zeichnung zeigen:
Fig. 1 in schematischer Darstellung eine Vorrichtung zur Regeneration eines Filterelements nach dem Stand der Technik,
Fig. 2 in schematisierter Darstellung die erfindungsgemäße Vorrichtung und
Fig. 3 eine weitere Ausführungsform der Erfindung in schematisierter Darstellung.

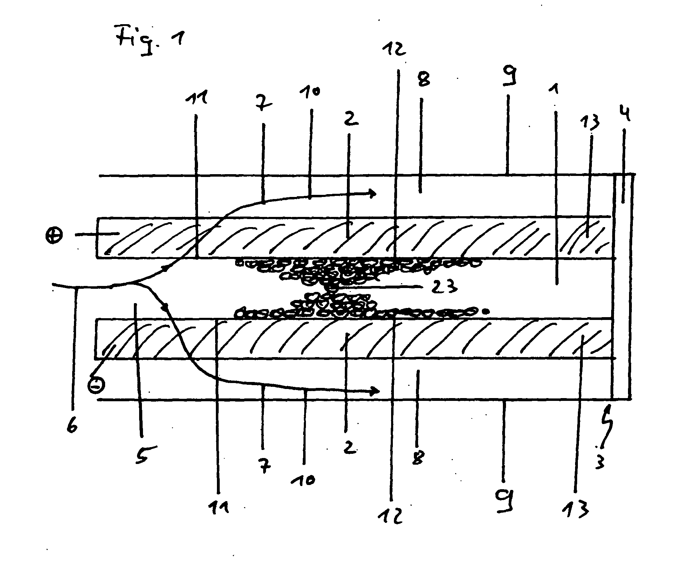

Fig. 1 zeigt seitlich geschnitten einen Strömungskanal 1, der von einem Filterelement 2 umgeben wird. An seinem hinteren Ende 3 ist der Strömungskanal 1 durch einen Boden 4 verschlossen. Mit Bezugsziffer 6 wird ein Abgasstrom eines Dieselmotors (nicht gezeigt) dargestellt, der am vorderen Ende 5 des Strömungskanals 1 in diesen einströmt und entsprechend dem Pfad 7 das Filterelement 2 durchströmt und auf der, dem Strömungskanal 1 abgewandten Seite 8 des Filterelements 2 aus dem Filterelement 2 austritt. Auf der vom Strömungskanal abgewandten Seite 8 des Filterelements 2 wird das Filterelement 2 von einem Mantel 9 umschlossen, der das aus dem Filterelement 2 austretende, von den Russpartikeln gereinigte Abgas 10 abführt. An den Wänden 11 des Strömungskanals 1 sind im Bereich des Filterelements 2 Russpartikel 12 erkennbar. Nach der Fig. 1 ist das Filterelement 2 in zwei Hälften 13 unterteilt, die unterschiedlich elektrisch geladen sind. Die Fig. 1 beschreibt den Fall, dass die an den Wänden 11 des Strömungskanals anhaftenden Russpartikel 12 eine Brücke 23 zwischen den beiden unterschiedlich elektrisch geladenen Hälften 13 des Filterelements 2 bilden. Auf diese Weise entsteht ein Kurzschluss, der einen elektrischen Funken auslöst, der den Abbrand der Russpartikel 12 initiiert.

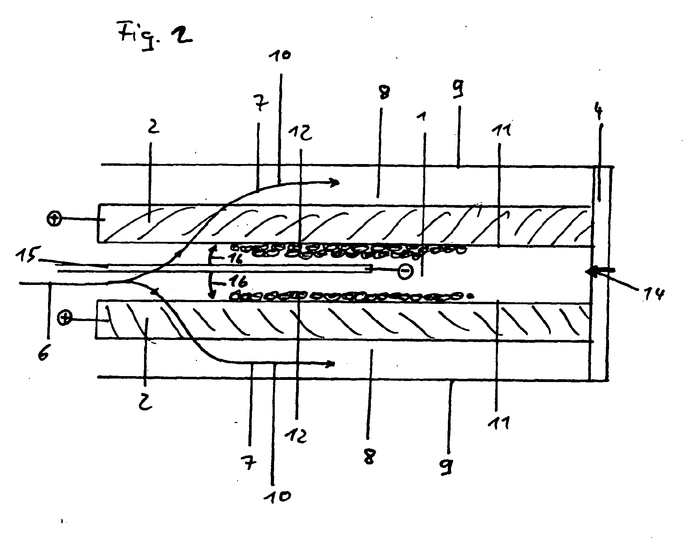

Fig. 2 zeigt eine Vorrichtung zum Entfernen von, in einem Abgasstrom 6 mitgeführten Russpartikeln 12 entsprechend der Fig. 1, mit dem Unterschied, dass die Filterelemente 2 in gleicher Weise elektrisch geladen sind. Im Boden 4 ist ein Sensor 14 angeordnet, der beispielsweise ein Gegendrucksensor sein kann. Ein Metallelement 15 ist in den Strömungskanal 1 eingeführt und verläuft zu diesem koaxial. An das Metallelement 15 ist eine gegenüber den Filterelementen 2 entgegengesetzt gerichtete elektrische Spannung anlegbar. In der Fig. 2 sind an der Innenwand 11 des Strömungskanals 1 Russpartikel 12 dargestellt. Im Sensor 14 ist ein vorbestimmter Gegendruckwert hinterlegt, bei dessen Überschreitung an das Element 15 eine im Vergleich zu den Filterelementen 2 entgegengesetzt gerichtete Spannung anlegbar ist. Im Moment der Spannungsanlage schwingt das Metallelement 15 nach einer beliebigen Richtung der Pfeile 16 aus und kommt mit dem Metallelement 15 in Berührung, wodurch ein Zündfunke entsteht, der den Abbrand der anhaftenden Russpartikel 12 im Strömungskanal 1 initiiert. Der Abgasstrom 6 durchtritt entsprechend dem Pfad 7 das Filterelement 2 und tritt als gereinigtes Abgas 10 auf der von den Russpartikeln 12 abgewandten Seite 8 des Filterelements 2 in den Mantel 9 ein. Die Oberfläche des Filterelements 2 kann mechanisch geprägt sein.

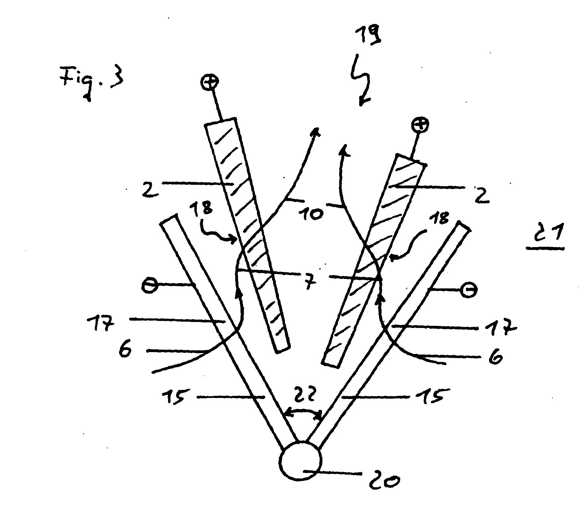

Fig. 3 zeigt die erfindungsgemäße Vorrichtung in einer Ausführungsform, in der die Metallelemente 15 fächerförmig zueinander angeordnet sind. Die Metallelemente 15 sind zueinander etwa in einer V-Form angeordnet und elektrisch gleichgerichtet geladen. Zwischen den beiden Schenkeln 17 der Metallelemente 15 sind elektrisch entgegengesetzt geladene Filterelemente 2 angeordnet. Entsprechend dem Pfad 7 tritt der Abgasstrom 6 an der dem Metallelement 15 zugewandten Seite 18 des Filterelements 2 durch dieses hindurch und verlässt die Vorrichtung 19 als gereinigtes Abgas 10. Die zueinander V-förmig angeordneten Schenkel 17 der Metallelemente 15 sind in einer Fassung 20 miteinander verbunden und in einer durch die Metallelemente verlaufenden Ebene 21 wechselweise in die Richtungen 22 schwenkbar.

### Bezugszeichenliste

- 1: Strömungskanal
- 2: Filterelement
- 3: hinteres Ende des Strömungskanals
- 4: Boden
- 5: Vorderes Ende des Strömungskanals
- 6: Abgasstrom
- 7: Pfad des Abgasstroms
- 8: abgewandte Seite des Filterelements
- 9: Mantel
- 10: gereinigtes Abgas
- 11: Wand des Strömungskanals
- 12: Russpartikel
- 13: Hälfte des Filterelements
- 14: Sensor
- 15: Metallelement
- 16: Pfeile
- 17: Schenkel
- 18: Seite des Filterelements
- 19: Vorrichtung
- 20: Fassung
- 21: Ebene
- 22: Richtungen
- 23: Brücke

## Patentansprüche

1. Vorrichtung zum Entfernen von in einem Abgasstrom (6) eines Dieselmotors mitgeführten Russpartikeln (12) mit mindestens einem in einem Strömungskanal (1) angeordneten und vom Abgasstrom (6) durchströmten Filterelement (2) und mit einer Einrichtung zur Initiierung des Abbrands, der auf Grund der Filtrierung am Filterelement (2) anhaftenden Russpartikel (12), wobei das Filterelement (2) elektrisch geladen ist, wobei die Einrichtung mindestens ein im Strömungskanal (1) im Bereich des Filterelements (2) entgegengesetzt geladenes Metallelement (15) umfasst, das mit seinem Ende freitragend in dem Strömungskanal (1) angeordnet ist, **dadurch gekennzeichnet, dass** dessen Ende bis zum Kontakt mit dem Filterelement (2) ausschwingt.

2. Vorrichtung nach Anspruch 1, **dadurch gekennzeichnet, dass** das Filterelement (2) in einer Wand (11) des den Abgasstrom (6) führenden Strömungskanals (1) angeordnet ist.

3. Vorrichtung nach einem oder mehreren der vorhergehenden Ansprüche, **dadurch gekennzeichnet, dass** der Strömungskanal (1) am stromabwärtigen Ende des Filterelementes (2) verschlossen ist.

4. Vorrichtung nach Anspruch 1, **dadurch gekennzeichnet, dass** das Metallelement (15) in einem, den Strömungskanal (1) verschließenden Boden (4) gelagert ist.

5. Vorrichtung nach Anspruch 1, **dadurch gekennzeichnet, dass** das Metallelement (15) an einer Wand (11) des Strömungskanals (1) gelagert ist und mit seinem freitragenden Ende in Strömungsrichtung weist.

6. Vorrichtung nach Anspruch 1, **dadurch gekennzeichnet, dass** das Filterelement (2) aus Sintermetall besteht.

7. Vorrichtung nach Anspruch 1, **dadurch gekennzeichnet, dass** das Metallelement (15) etwa koaxial in dem Strömungskanal (1) angeordnet ist.

8. Vorrichtung nach Anspruch 1, **dadurch gekennzeichnet, dass** mehrere Metallelemente (15) neben- oder hintereinander in dem Strömungskanal (1) angeordnet sind.

9. Vorrichtung nach Anspruch 5, **dadurch gekennzeichnet, dass** die Wand (11) des Strömungskanals (1) im Bereich des Filterelementes (2) siebartig ausgebildet ist.

10. Vorrichtung nach Anspruch 1, **dadurch gekennzeichnet, dass** der Strömungskanal (1) von einem Mantel (9) umschlossen ist, der den aus dem Filterelement (2) austretenden gereinigten Abgasstrom (6) aufnimmt.

11. Vorrichtung nach Anspruch 1, **dadurch gekennzeichnet, dass** in dem Abgasstrom (6) ein, auf dessen Druckänderungen ansprechender Sensor (14) angeordnet ist, der das Ausschwingen des Metallelementes auslöst.

12. Vorrichtung nach Anspruch 11, **dadurch gekennzeichnet, dass** der Sensor (6) in dem gereinigten Abgasstrom (10) angeordnet ist und bei einem vorbestimmten Druckabfall das Ausschwingen des Metallelementes auslöst.

13. Vorrichtung nach Anspruch 4, **dadurch gekennzeichnet, dass** an dem, den Strömungskanal (1) verschließenden Boden (4) ein Behälter zur Aufnahme der Asche der abgebrannten Russpartikel (12) angeordnet ist.

## Claims

1. Device to remove soot particles (12) that are carried in an exhaust gas flow (6) of a diesel engine, with at least one filter element (2) that is arranged in a flow channel (1) and through which the exhaust gas flow (6) passes, and with a device to initiate the burn-off of the soot particles (12) that adhere to the filter element (2) as a result of the filtration, whereby the filter element (2) is electrically charged, whereby the device contains at least one opposing charged metal element (15) in the flow channel (1) in the area of the filter element (2), which metal element (15) is arranged such that its end is self-supporting in the flow channel (1), **characterised in that** the end of the metal element (15) swings out until it comes into contact with the filter element (2).

2. Device in accordance with claim 1, **characterised in that** the filter element (2) is arranged in a wall (11) of the flow channel (1) that guides the exhaust gas flow (6).

3. Device in accordance with one or several of the previous claims, **characterised in that** the flow channel (1) is sealed at the downstream end of the filter element (2).

4. Device in accordance with claim 1, **characterised in that** the metal element (15) is mounted in a base plate (4) that seals the flow channel (1).

5. Device in accordance with claim 1, **characterised in that** the metal element (15) is mounted in a wall (11) of the flow channel (1) and points in the direction of flow with its self-supporting end.

6. Device in accordance with claim 1, **characterised in that** the filter element (2) is constructed from sintered metal.

7. Device in accordance with claim 1, **characterised in that** the metal element (15) is arranged approximately coaxially in the flow channel (1).

8. Device in accordance with claim 1, **characterised in that** several metal elements (15) are arranged beside or behind one another in the flow channel (1).

9. Device in accordance with claim 5, **characterised in that** the wall (11) of the flow channel (1) in the area of the filter element (2) is designed in the manner of a screen.

10. Device in accordance with claim 1, **characterised in that** the flow channel (1) is enclosed by a sheath (9) that receives the cleaned exhaust gas flow (10) that exits the filter element (2).

11. Device in accordance with claim 1, **characterised in that** a sensor (14) is arranged in the exhaust gas flow (6), which sensor responds to pressure changes in the exhaust gas flow (6) and triggers the swinging-out movement of the metal element.

12. Device in accordance with claim 11, **characterised in that** the sensor (14) is arranged in the cleaned exhaust gas flow (10) and triggers the swinging-out movement of the metal element in the case of a predetermined drop in pressure.

13. Device in accordance with claim 4, **characterised in that** a container to collect the ashes of the burnt soot particles (12) is arranged on the base plate (4) that seals the flow channel (1).

## Revendications

1. Dispositif pour éliminer les particules de suie (12) transportées dans un flux de gaz d'échappement (6) d'un moteur diesel avec au moins un élément filtrant (2) disposé dans un conduit d'écoulement (1) et traversé par le flux de gaz d'échappement (6) et avec un dispositif de déclenchement du brûlage des particules de suie (12) adhérant à l'élément filtrant (2) en raison du filtrage, auquel cas l'élément filtrant (2) est chargé électriquement et auquel cas le dispositif comprend au moins un élément métallique (15) chargé de manière opposée dans le conduit d'écoulement (1) au niveau de l'élément filtrant (2), cet élément métallique étant disposé au niveau de son extrémité de manière non suspendue dans le conduit d'écoulement (1), **caractérisé en ce que** son extrémité cesse d'osciller au contact avec l'élément filtrant (2).

2. Dispositif selon la revendication 1, **caractérisé en ce que** l'élément filtrant (2) est disposé dans une paroi (11) du conduit d'écoulement (1) guidant le flux de gaz d'échappement (6).

3. Dispositif selon l'une ou plusieurs des revendications mentionnées précédemment, **caractérisé en ce que** le conduit d'écoulement (1) est obturé au niveau de l'extrémité de sortie du flux de gaz d'échappement de l'élément filtrant (2).

4. Dispositif selon la revendication 1, **caractérisé en ce que** l'élément métallique (15) est fixé dans un fond (4) obturant le conduit d'écoulement (1).

5. Dispositif selon la revendication 1, **caractérisé en ce que** l'élément métallique (15) est fixé sur une paroi (11) du conduit d'écoulement (1) et est orienté avec son extrémité non suspendue dans le sens d'écoulement.

6. Dispositif selon la revendication 1, **caractérisé en ce que** l'élément filtrant (2) est formé en métal fritté.

7. Dispositif selon la revendication 1, **caractérisé en ce que** l'élément métallique (15) est disposé, par exemple, de manière coaxiale dans le conduit d'écoulement (1).

8. Dispositif selon la revendication 1, **caractérisé en ce que** plusieurs éléments métalliques (15) sont disposés les uns à côté des autres ou bien les uns derrière les autres dans le conduit d'écoulement (1).

9. Dispositif selon la revendication 5, **caractérisé en ce que** la paroi (11) du conduit d'écoulement (1) est formée comme un élément de criblage dans la zone de l'élément filtrant (2).

10. Dispositif selon la revendication 1, **caractérisé en ce que** le conduit d'écoulement (1) est entouré d'une enveloppe (9) qui absorbe le flux de gaz d'échappement (6) épuré sortant de l'élément filtrant (2).

11. Dispositif selon la revendication 1, **caractérisé en ce qu'**un capteur (14) réagissant aux changements de pression du flux de gaz d'échappement est disposé dans le flux de gaz d'échappement (6) et déclenche la cessation des oscillations de l'élément métallique (15).

12. Dispositif selon la revendication 11, **caractérisé en ce que** le capteur (6) est disposé dans le flux de gaz d'échappement (10) épuré et déclenche la cessation des oscillations de l'élément métallique lors d'une chute de pression prédéfinie.

13. Dispositif selon la revendication 4, **caractérisé en ce qu'**un récipient de collecte de la cendre des particules de suie (12) brûlées est disposé au niveau du fond (4) obturant le conduit d'écoulement (1).
